# EUROPÄISCHE PATENTSCHRIFT

(11) **EP 0 925 004 B1**
(45) Veröffentlichungstag und Bekanntmachung des Hinweises auf die Patenterteilung: **02.05.2002**
(21) Anmeldenummer: 97913074.7
(22) Anmeldetag: 28.11.1997
(51) Int. Cl.: A46B 5/00, A61C 17/22

(54) **Aufsteckteil für eine motorisch, insbesondere elektromotorisch betriebene Zahnbürste**
Removable piece for a motor driven toothbrush, in particular electrical toothbrush
Pièce à rapporter pour une brosse à dents entrainée par un moteur, notamment brosse à dents électrique

(30) Priorität: 16.07.1997 CH 174597
(43) Veröffentlichungstag der Anmeldung: 30.06.1999
(60) Teilanmeldung: 01129156.4
(73) Patentinhaber: TRISA BÜRSTENFABRIK AG TRIENGEN, CH-6234 Triengen (CH)
(72) Erfinder: FISCHER, Franz, CH-6234 Triengen (CH); PFENNIGER, Philipp, CH-6234 Triengen (CH)
(74) Vertreter: Patentanwälte Schaad, Balass, Menzl & Partner AG
(86) Internationale Anmeldenummer: CH9700449
(87) Internationale Veröffentlichungsnummer: WO9903372

(56) Entgegenhaltungen:
- EP-A- 0 510 940
- DE-U- 29 520 230
- GB-A- 2 172 196
- US-A- 4 149 291
- US-A- 5 467 494

## Beschreibung

Die Erfindung betrifft einen Aufsteckteil für eine motorisch, insbesondere elektromotorisch betriebene Zahnbürste gemäss dem Oberbegriff des Anspruches 1.

Ein Aufsteckteil dieser Art ist beispielsweise aus der DE-U-295 20 230 bekannt. Bei diesem Aufsteckteil ist in einem Kopfteil eines innen einen Hohlraum aufweisenden Gehäuses ein drehbarer Borstenträger gelagert. Im Innern des Gehäuses verläuft eine sich rechtwinklig zur Drehachse des Borstenträgers erstreckende Antriebswelle, die bei auf den Griffteil einer Elektrozahnbürste aufgesetztem Gehäuse mit einem in diesem Griffteil untergebrachten Antrieb gekoppelt ist.

In der US-A-5 467 494 ist eine Elektrozahnbürste mit einem Gehäuse und einem auf dieses aufgesteckten Aufsteckteil beschrieben. Der Aufsteckteil weist einen biegesteifen Schaftteil auf, der an seinem einen Ende einen Bürstenkopf trägt und an seinem andern Ende lösbar mit einer Abtriebswelle eines im Gehäuse der Elektrozahnbürste untergebrachten Antriebes gekoppelt ist. Dieses Gehäuse besteht aus zwei gelenkig miteinander verbundenen Gehäuseteilen, von denen der eine Gehäuseteil den Aufsteckteil trägt und der andere Gehäuseteil als Griffteil dient. Während des Nichtgebrauchs der Zahnbürste nimmt der den Aufsteckteil tragende Gehäuseteil unter der Wirkung einer Feder eine bestimmte Lage bezüglich des Griffteils ein. Beim Zähneputzen wirkt auf den Bürstenkopf des Aufsteckteils eine Kraft, die der Kraft der Feder entgegengesetzt ist. Wird letztere von der auf den Bürstenkopf wirkenden Kraft übertroffen, so wird der den Aufsteckteil tragende Gehäuseteil zurückgedrängt und gegen die Wirkung der Feder bezüglich des Griffteiles verschwenkt. Die Herstellung einer derartigen Elektrozahnbürste mit zwei relativ zueinander verschwenkbaren, über eine Feder miteinander gekoppelten Gehäuseteilen ist verhältnismässig aufwändig.

Der vorliegenden Erfindung liegt die Aufgabe zugrunde, einen Aufsteckteil der eingangs genannten Art zu schaffen, mit dem eine bessere Reinigungswirkung erzielt werden kann.

Diese Aufgabe wird erfindungsgemäss durch einen Aufsteckteil mit den Merkmalen des Anspruches 1 gelöst.

Dadurch, dass das Gehäuse des Aufsteckteils eine Biegezone aufweist und durch diese in zwei relativ zueinander elastisch auslenkbare Gehäuseteile unterteilt ist, so dass bei einer Einwirkung von Kräften in Richtung gegen die Bürstfläche der in einer Antriebsverbindung verbleibende Bürstenkopf elastisch verschwenkbar bzw. zurückdrängbar ist, wird beim Gebrauch der Zahnbürste ein besseres Anliegen der reinigungswirksamen Bürstfläche und ein optimaler Anpressdruck erreicht.

Bevorzugte Weiterausgestaltungen der erfindungsgemässen Zahnbürste bilden den Gegenstand der abhängigen Ansprüche.

Ein Ausführungsbeispiel der erfindungsgemässen Zahnbürste ist in der Zeichnung dargestellt und im folgenden näher beschrieben.

Es zeigen rein schematisch:
- Fig. 1: ein erstes Ausführungsbeispiel eines Aufsteckteiles einer Elektrozahnbürste in Ansicht;
- Fig. 2: im Längsschnitt den Aufsteckteil gemäss Fig. 1 in einer Normalstellung ;
- Fig. 3: im Längsschnitt den Aufsteckteil gemäss Fig. 1 in einer Auslenkstellung;
- Fig. 4: ein zweites Ausführungsbeispiel eines Aufsteckteiles einer Elektrozahnbürste in Ansicht in der der Fig. 2 entsprechenden Normalstellung;
- Fig. 5: ein drittes Ausführungsbeispiel eines Aufsteckteiles einer Elektrozahnbürste in Ansicht in der der Fig. 2 entsprechenden Normalstellung; und
- Fig. 6: ein viertes Ausführungsbeispiel eines Aufsteckteiles einer Elektrozahnbürste in Ansicht in der der Fig. 2 entsprechenden Normalstellung.

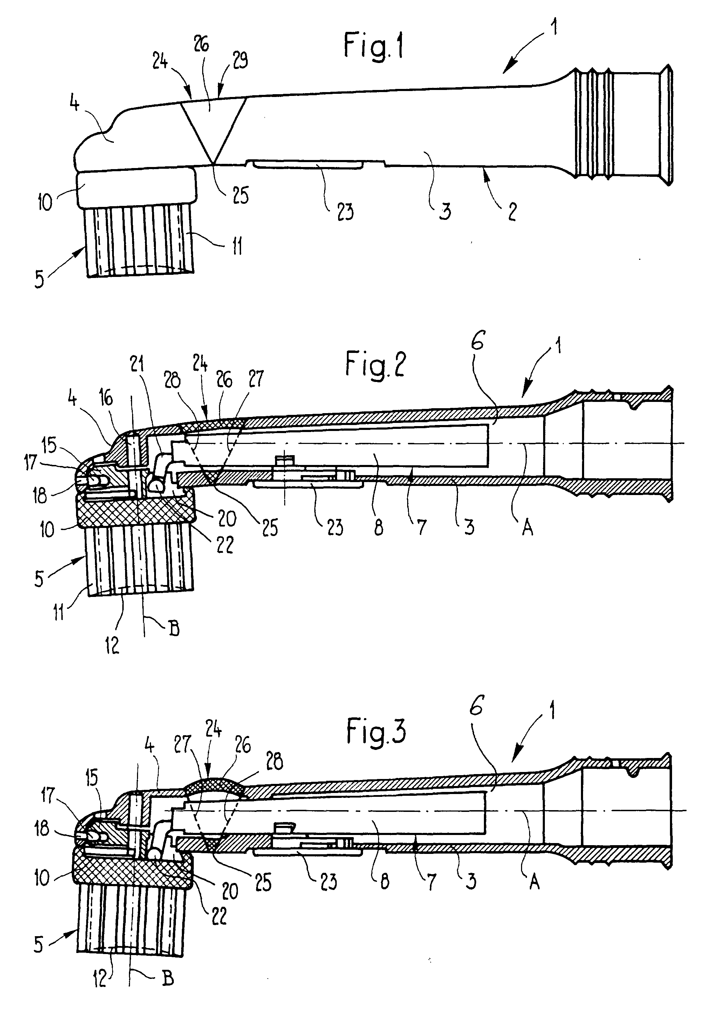

Gemäss Fig. 1 bis 3 weist ein Aufsteckteil 1 für eine Elektrozahnbürste ein Gehäuse 2 auf, das auf einen in der Zeichnung nicht dargestellten Griffteil aufsteckbaren, hinteren Gehäuseteil 3 sowie einen vorderen Gehäuseteil 4 umfasst. Im vorderen Gehäuseteil 4 ist ein Bürstenkopf 5 drehbeweglich gelagert, der mittels einer in einem Hohlraum 6 des Gehäuses 2 untergebrachten Übertragungsvorrichtung 7, von der in Fig. 2 und 3 nur ein Teil ersichtlich ist, von einem in der Zeichnung nicht dargestellten Elektromotor angetrieben wird. Dem Bürstenkopf 5 wird eine alternierende Drehbewegung bzw. Drehschwingung erteilt, wobei der Drehwinkelbereich einstellbar ist. Eine derartige Zahnbürste bzw. eine derartige Übertragungsvorrichtung bilden den Gegenstand des DE-U-295 20 230.0; die Übertragungsvorrichtung 7 an sich wird daher im folgenden nicht im Detail beschrieben. Eine Antriebswelle der Übertragungsvorrichtung 7 ist in Fig. 2 und 3 mit 8 bezeichnet, die Antriebsachse mit A. Die Bürstenkopfachse ist mit dem Bezugszeichen B versehen.

Der Bürstenkopf 5 weist einen Borstenträger 10 mit abstehenden Borsten 11 auf. Die freistehenden Enden der Borsten 11 bilden eine Bürstfläche 12. Als Beispiel ist eine zur Bürstenkopfachse B konzentrische, konkav gewölbte Bürstfläche 12 dargestellt.

Wie aus Fig. 2 und 3 ersichtlich ist der Borstenträger 10 in der Art einer Schnappverbindung mit einer im Gehäuseteil 4 drehbar gelagerten Drehscheibe 15 verbunden und zum Auswechseln des Bürstenkopfes 5 von dieser wegnehmbar. Die Drehscheibe 15 mit dem Bürstenkopf 5 ist um einen im Gehäuseteil 4 angebrachten, mit der Bürstenkopfachse B koaxialen Achsenstift 16 in beiden Drehrichtungen schwenkbar. Mittels eines in eine kreissegmentförmige Ausnehmung 17 in der Drehscheibe 15 hineinragenden, radial zur Bürstenkopfachse B im Gehäuseteil 4 angeordneten Sicherungsstiftes 18 ist die Drehscheibe 15 im Gehäuseteil 4 axial gesichert.

Die Übertragung der alternierenden Drehbewegung von der Antriebswelle 8 auf die Drehscheibe 15 und auf den mit dieser verbundenen Bürstenkopf 5 erfolgt in der aus dem DE-U-295 20 230.0 bereits bekannten Weise, nämlich mittels eines der Antriebswelle 8 zugeordneten, in eine radiale Ausnehmung 20 in der Drehscheibe 15 hineinragenden Nockens 21. Der Nocken 21 ist hier im Kontaktbereich mit der Ausnehmung 20 mit einem kugelförmigen Teil 22 ausgestattet. Auch bei dieser in Fig. 1 bis 3 dargestellten Ausführungsform des Aufsteckteils kann mittels einer axialen Verschiebung der mit dem Nocken 21 ausgestatteten Antriebswelle 8 der Winkelbereich der Drehverschwenkung der Drehscheibe 15 und des Bürstenkopfes 5 eingestellt werden. Die Verschiebung der Antriebswelle 8 und somit die radiale Verstellung des Nockens 21 in der Ausnehmung 20 zwecks Winkelbereich-Einstellung erfolgt durch Umschalten eines in vorzugsweise zwei verschiedene Schaltpositionen verstellbaren Schiebers 23.

Zwischen dem hinteren Gehäuseteil 3 und dem mit dem Bürstenkopf versehenen vorderen Gehäuseteil 4 befindet sich erfindungsgemäss eine Biegezone 29, so dass beim Gebrauch der Zahnbürste bei einer Einwirkung von Kräften in Richtung gegen die Bürstfläche 12 der Gehäuseteil 4 mit dem Bürstenkopf 5 elastisch aus der in Fig. 2 gezeigten Normalstellung in eine Auslenkstellung zurückdrängbar ist. Bei dem in Fig. 1 bis 3 dargestellten Ausführungsbeispiel sind die beiden, aus Kunstoff hergestellten Gehäuseteile 3, 4 voneinander getrennt und nur mittels einer Gelenkverbindung 24 miteinander verbunden. Die Gelenkverbindung 24 umfasst ein die Schwenkachse des Gehäuseteiles 4 bildendes, dünnes Kunststoff-Scharnier 25 (Filmscharnier) sowie eine Gelenkmanschette 26. Das Scharnier 25 ist rechtwinklig zu einer durch die Bürstenkopfachse B und die Antriebsachse A, die zugleich die Längsachse des Gehäuseteils 3 bildet, definierten Ebene angeordnet; die Schwenkachse verläuft somit senkrecht zur Zeichnungsebene.

Die Gelenkmanschette 26 aus einem gummielastischen Material ist zwischen den beiden Gehäuseteilen 3, 4 bzw. zwischen ihren einander zugewandten Stirnflächen 27, 28 - sich zum Scharnier 25 hin keilformig verjüngend - eingebaut.

Bei der dargestellten, bevorzugten Ausführungsform kann der mit dem Bürstenkopf 5 versehene vordere Gehäuseteil 4 gegenüber dem hinteren Gehäuseteil 3 um die durch das Scharnier 25 definierte Schwenkachse im Uhrzeigersinn nach Fig.2 etwa um 6° verschwenkt bzw. zurückgedrängt werden. Dabei wird die gummielastische Gelenkmanschette 26 zusammengepresst, der keilförmige Raum zwischen dem Kopfteil 4 und dem Gehäuseteil 3 verkleinert, und das gummielastische Material beult sich auf der dem Scharnier 25 abgewandten Seite etwas nach aussen (Fig. 3). Sobald die Krafteinwirkung auf den Bürstenkopf 5 aufgehoben wird, kehrt der Kopfteil 4 mit dem Bürstenkopf 5 unter Wirkung der sich entspannenden gummielastischen Gelenkmanschette 26 in die in Fig. 2 dargestellte Neutralstellung zurück. Die Biegezone könnte jedoch derart ausgebildet sein, dass eine Verschwenkung des mit dem Bürstenkopf 5 versehenen Gehäuseteiles 4 im Winkelbereich bis zu 90° möglich wäre.

Bei der in Fig. 2 und 3 dargestellten Ausführungsform ragt der Nocken 21 in der Normalstellung nach Fig.2 mit Spiel, d.h nicht ganz bis zum Borstenträger 10, in die Ausnehmung 20 der Drehscheibe 15 hinein; in der in Fig. 3 gezeigten Auslenkstellung befindet sich der Nocken 21 sehr nahe beim Borstenträger 10. In beiden Endstellungen des Gehäuseteiles 4 wird der Eingriff des Nockens 21 in die Ausnehmung 20 gewährleistet. Der kugelförmige Teil 22 des Nockens 21 ermöglicht in jeder Schwenkstellung des Gehäuseteiles 4 eine einwandfreie Bewegungsübertragung auf die Drehscheibe 15 sowie eine reibungslose Verschwenkung des Gehäuseteiles 4.

Wird der Bürstenkopf 5 im Betrieb durch die in Richtung gegen die Bürstfläche 12 wirkenden Kräfte aus der Normalstellung zurückgedrängt, so verändert sich die Lage des Nockens 21 in der radialen Ausnehmung 20, d.h. der Abstand zwischen dem Nocken 21 und dem die Drehachse B des Bürstenkopfes 5 festlegenden Achsenstift 16 wird verkleinert. Das hat zur Folge, dass der Drehwinkel des Bürstenkopfes 5 verkleinert wird, ohne dass von aussen eine Drehwinkelumstellung erfolgen muss. Anders ausgedrückt verkleinert sich der Drehwinkel des Bürstenkopfes 5 mit der Zunahme der auf den Bürstenkopf 5 wirkenden Druckkräfte.

Es wäre jedoch auch möglich, die Antriebswelle 8 der Übertragungsvorrichtung 7 so auszubilden, dass sie die Auslenkung des Gehäuseteiles 4 und der in diesem gelagerten Drehscheibe 15 mitmachen kann, damit der Nocken 21 bei Verschwenkung des Gehäuseteiles 4 einwandfrei im Eingriff mit der Ausnehmung 20 bleibt. Die Antriebswelle kann hiezu beispielsweise als eine flexible Welle ausgestaltet oder mit einem Kardangelenk ausgestattet sein.

Durch die elastische Auslenkbarkeit des den Bürstenkopf 5 aufnehmenden Gehäuseteiles 4 wird beim Gebrauch der Zahnbürste ein besseres Anliegen der reinigungswirksamen Bürstfläche 12 und ein optimaler Anpressdruck erreicht.

Beim dargestellten Ausführungsbeispiel ist der Winkel zwischen der Bürstenkopfachse B und der Antriebsachse A vor der Verschwenkung, d.h. in der Neutralstellung etwas kleiner als 90°, d.h der Bürstenkopf 5 ist etwas rückwärts geneigt. In der maximalen Auslenkstellung ist dieser Winkel etwas grösser als 90°; d.h der Bürstenkopf 5 ist etwas vorwärts geneigt. Es könnten allerdings auch andere Winkelverhältnisse beider Achsen in den Endstellungen angestrebt werden.

Bei der in Fig. 1 bis 3 dargestellten Ausführungsform befindet sich die Schwenkachse bzw. das Scharnier 25 auf der unteren Seite des Gehäuses 2 und die gummielastische Gelenkmanschette 26 wird beim Zurückdrängen des Gehäuseteiles 4 auf Druck beansprucht. Die Schwenkachse bzw. das Scharnier 25 könnten allerdings auch auf der oberen Seite des Gehäuses 2 platziert sein, so dass die gummielastische Gelenkmanschette bei Verschwenkung des Gehäuseteiles 4 statt der Druck-Beanspruchung einer Zug-Beanspruchung ausgesetzt wäre.

Der Aufsteckteil 1 kann beispielsweise in einem Zweikomponeneten-Spritzgussverfahren hergestellt werden.

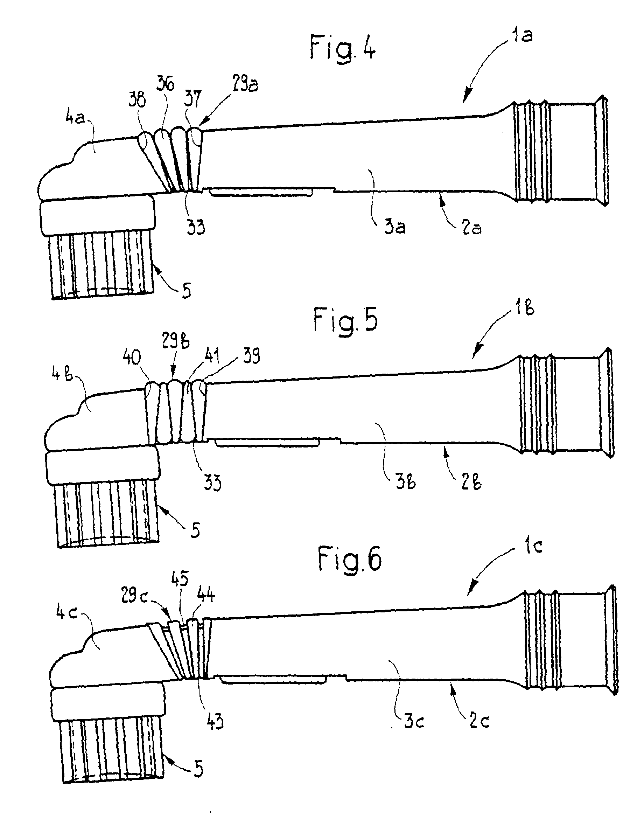

Fig. 4 zeigt ein zweites Ausführungsbeispiel eines Aufsteckteiles 1a für eine Elektrozahnbürste. Bei diesem Ausführungsbeispiel sind die beiden Gehäuseteile 3a, 4a vorzugsweise über schmale, biegsame Stege (in Fig. 4 nicht sichtbar) miteinander verbunden. Während die beiden Gehäuseteile 3a, 4a sowie der durch die Stege gebildete Gehäusebereich 33 aus dem gleichen Werkstoff hergestellt sind, ist zwischen einander zugewandten Stirnflächen 37, 38 beider Gehäuseteile 3a, 4a ein manschettenförmiger Balg 36 aus einem anderen, gummielastischem Material eingebaut, der zusammen mit dem Gehäusebereich 33 die Biegezone 29a bildet. Beim Zurückdrängen des mit dem Bürstenkopf 5 versehenen Gehäuseteiles 4a wird der Balg 36 auf Druck beansprucht.

Auch bei der in Fig. 5 dargestellten dritten Ausführungsform eines Aufsteckteils 1b weist das Gehäuse 2b einen die beiden Gehäuseteile 3b, 4b verbindenden, vorzugsweise durch schmale Stegen (nicht sichtbar) gebildeten, elastisch biegsamen Gehäusebereich 33 auf. Ein zusammen mit dem Gehäusebereich 33 die Biegezone 29b bildender, zwischen Stirnflächen 39, 40 der beiden Gehäuseteile 3b, 4b eingebauter Balg 41 aus gummielastischem, andersartigem Material als die beiden Gehäuseteile 3b, 4b und die Stege, wird beim Zurückdrängen des mit dem Bürstenkopf 5 versehenen Gehäuseteiles 4b sowohl auf Druck, als auch auf Zug beansprucht.

Auch die Aufsteckteile 1a, 1b sind für die Herstellung in einem Zweikomponeneten-Spritzgussverfahren geeignet.

Eine weitere Ausführungsform eines Aufsteckteils 1c nach Fig. 6 stellt eine Einkomponente-Ausführung dar; die beiden Gehäuseteile 3c, 4c sowie auch die ganze Gehäusewand bzw. der elastisch deformierbare Gehäusebereich 43 in der Biegezone 29c sind aus dem gleichen Werkstoff hergestellt. Letztere umfasst wiederum vorzugsweise die die beiden Gehäuseteile 3c, 4c verbindende schmale Stege (in Fig. 6 nicht sichtbar) und ausserdem einen, manschettenförmigen Teil 44. Der die Funktion der Balge 36, 41 gemäss Fig. 4 und 5 übernehmende elastisch deformierbare Teil 44 kann zur Erhöhung der Elastizität mehrere Durchgänge 45 aufweisen.

Bei allen vorstehend beschriebenen Ausführungsformen wäre es auch möglich, die Biegezone 29 bzw. 29a bzw. 29b bzw. 29c weiter hinten zum Griff hin anzuordnen.

Die Biegezone kann so ausgestaltet sein, dass neben der Verschwenkung des den Bürstenkopf 5 tragenden Gehäuseteiles in der durch die Bürstenkopfachse B und die Längsachse A des Aufsteckteils definierten Ebene auch eine zusätzliche seitliche Verschwenkung desselben erfolgen kann. Dies kann beispielsweise mit den in den Fig. 4 bis 6 dargestellten Ausführungen der Biegezone ermöglicht werden. Allerdings wären auch andere Ausgestaltungen mit elastischen Ringen oder Falten denkbar.

Die erfindungsgemässe Auslenkbarkeit des den Bürstenkopf aufnehmenden Gehäuseteiles könnte selbstverständlich auch bei nicht alternierend, sondern in einer Drehrichtung angetriebenen Bürstenköpfen Anwendung finden.

## Patentansprüche

1. Aufsteckteil (1) für eine motorisch betriebene Zahnbürste, mit einem auf einen Griffteil einer Zahnbürste aufsteckbaren, langgestreckten, innen einen Hohlraum (6) aufweisenden Gehäuse (2, 2a, 2b, 2c), mit einem im Gehäuse (2, 2a, 2b, 2c) drehbeweglich gelagerten Bürstenkopf (5), der einen Borstenträger (10) mit abstehenden Borsten (11) aufweist, deren Enden eine Bürstfläche (12) bilden, wobei die Drehachse (B) des Bürstenkopfes (5) in einem Winkel zur Längsachse (A) des Gehäuses (2, 2a, 2b, 2c) angeordnet ist, und mit einer im Hohlraum des Gehäuses (2, 2a, 2b, 2c) angeordneten und mit dem Bürstenkopf (5) in Antriebsverbindung stehenden Übertragungsvorrichtung (7), die mit einem in einem Griffteil einer Zahnbürste untergebrachten Antrieb koppelbar ist und über welche der Bürstenkopf (5) drehbeweglich antreibbar ist, **dadurch gekennzeichnet, dass** das Gehäuse (2, 2a, 2b, 2c) eine Biegezone (29, 29a, 29b, 29c) aufweist und durch diese in zwei Gehäuseteile (3, 3a, 3b, 3c; 4, 4a, 4b, 4c) unterteilt ist, die relativ zueinander derart elastisch auslenkbar sind, dass bei einer Einwirkung von Kräften in Richtung gegen die Bürstfläche (12) der Bürstenkopf (5) in einer durch die Bürstenkopf-Drehachse (B) und die Längsachse (A) des Gehäuses (2, 2a, 2b, 2c) definierten Ebene elastisch verschwenkbar bzw. zurückdrängbar ist, und dass die Übertragungsvorrichtung (7) derart ausgebildet ist, dass die Antriebsverbindung mit dem Bürstenkopf (5) auch bei der Auslenkung der Gehäuseteile (3, 3a, 3b, 3c; 4, 4a, 4b, 4c) relativ zueinander erhalten bleibt.

2. Aufsteckteil nach Anspruch 1, **dadurch gekennzeichnet, dass** die Biegezone (29a bzw. 29b bzw. 29c) einen elastisch deformierbaren, die beiden Gehäuseteile (3a, 3b, 3c; 4a, 4b, 4c) miteinander verbindenden Gehäusebereich (33 bzw. 43) umfasst.

3. Aufsteckteil nach Anspruch 1, **dadurch gekennzeichnet, dass** die Biegezone (29) eine Gelenkverbindung (24) zwischen den beiden Gehäuseteilen (3, 4) umfasst.

4. Aufsteckteil nach Anspruch 3, **dadurch gekennzeichnet, dass** die Gelenkverbindung (24) ein Scharnier (25), das eine rechtwinklig zu der durch die Bürstenkopf-Drehachse (B) und die Längsachse (A) des Gehäuses (2) definierten Ebene angeordnete Schwenkachse bildet, sowie eine gummielastische Gelenkmanschette (26) zwischen den beiden Gehäuseteilen (3, 4) umfasst.

5. Aufsteckteil nach Anspruch 4, **dadurch gekennzeichnet, dass** die gummielastische Gelenkmanschette (26) keilförmig und sich zum Scharnier (25) verjüngend zwischen einander zugewandten Stirnflächen (27, 28) der beiden Gehäuseteile (3, 4) eingebaut ist.

6. Aufsteckteil nach Anspruch 2, **dadurch gekennzeichnet, dass** der elastisch deformierbare Gehäusebereich (33 bzw. 43) die beiden Gehäuseteile (3a, 4a bzw. 3b, 4b bzw. 3c, 4c) verbindende, schmale Stege umfasst.

7. Aufsteckteil nach Anspruch 2 oder 6, **dadurch gekennzeichnet, dass** ein zwischen einander zugewandten Stirnflächen (37, 38 bzw. 39, 40) der beiden Gehäuseteile (3a, 4a bzw. 3b, 4b) eingebauter manschettenförmiger Balg (36 bzw. 41) zusammen mit dem elastisch deformierbaren Gehäusebereich (33 bzw. 43) die Biegezone (29a bzw. 29b) bildet.

8. Aufsteckteil nach Anspruch 2 oder 6, **dadurch gekennzeichnet, dass** der elastisch deformierbare Gehäusebereich (43) aus dem gleichem Werkstoff hergestellt ist wie die beiden Gehäuseteile (3c, 4c) und einen manschettenförmigen, zur Erhöhung der Elastizität vorzugsweise mit Durchgängen versehenen Teil (44) aufweist.

9. Aufsteckteil nach einem der Ansprüche 1 bis 8, mit einer im Hohlraum (6) des Gehäuses (2, 2a, 2b, 2c) angeordneten, einen Teil der Übertragungsvorrichtung (7) bildenden Antriebswelle (8), **dadurch gekennzeichnet, dass** die Antriebswelle (8) als flexible Welle ausgebildet ist.

10. Aufsteckteil nach einem der Ansprüche 1 bis 8, **dadurch gekennzeichnet, dass** ein dem auslenkbaren Gehäuseteil (4, 4a, 4b, 4c) zugeordneter Teil der Übertragungsvorrichtung (7) über ein Kardangelenk mit dem im anderen Gehäuseteil (3, 3a, 3b, 3c) angeordneten Teil der Übertragungsvorrichtung (7) verbunden ist.

11. Aufsteckteil nach einem der Ansprüche 1 bis 10, **dadurch gekennzeichnet, dass** die Auslenkung des Gehäuseteiles (4, 4a, 4b, 4c) bzw. die Veränderung des Winkels zwischen der Bürstenkopf-Drehachse (B) und der Längsachse (A) im Winkelbereich von 0° bis 90° erfolgt und vorzugsweise etwa 6° beträgt.

12. Aufsteckteil nach einem der Ansprüche 1 bis 11, **dadurch gekennzeichnet, dass** der Winkel zwischen der Bürstenkopf-Drehachse (B) und der Längsachse (A) des Gehäuses (2, 2a, 2b, 2c) in einer Normalstellung etwas kleiner und in einer maximalen Auslenkstellung etwas grösser ist als ein rechter Winkel, so dass der Bürstenkopf (5) in der Normalstellung nach rückwärts und in der Auslenkstellung nach vorwärts geneigt ist.

13. Aufsteckteil nach einem der Ansprüche 1-12, mit einem eine alternierende Drehbewegung ausführenden Bürstenkopf (5), **dadurch gekennzeichnet, dass** die Uebertragungsvorrichtung (7) derart ausgebildet ist, dass bei einer durch die Einwirkung von Kräften in Richtung gegen die Bürstfläche (12) verursachten Zurückdrängung des Bürstenkopfes (5) sich dessen Drehwinkel verringert.

## Claims

1. Plug-on part (1) for a motor-driven toothbrush, having an elongate housing (2, 2a, 2b, 2c) which can be plugged onto a handle part of a toothbrush and has a cavity (6) on the inside, having a brush head (5) which is mounted in the housing (2, 2a, 2b, 2c) in a rotatable manner and has a bristle carrier (10) with projecting bristles (11), of which the ends form a brushing surface (12), the axis of rotation (B) of the brush head (5) being arranged at an angle to the longitudinal axis (A) of the housing (2, 2a, 2b, 2c), and having a transmission device (7) which is arranged in the cavity of the housing (2, 2a, 2b, 2c), is in drive connection with the brush head (5), can be coupled to a drive accommodated in a handle part of the toothbrush and via which the brush head (5) can be driven in a rotatable manner, **characterized in that** the housing (2, 2a, 2b, 2c) has a flexing zone (29, 29a, 29b, 29c) and is subdivided by the latter into two housing parts (3, 3a, 3b, 3c; 4, 4a, 4b, 4c), which can be deflected elastically relative to one another such that, with forces acting in the direction towards the brushing surface (12), the brush head (5) can be forced back or pivoted elastically in a plane defined by the axis of rotation (B) of the brush head and the longitudinal axis (A) of the housing (2, 2a, 2b, 2c), and **in that** the transmission device (7) is designed such that the drive connection to the brush head (5) remains intact even when the housing parts (3, 3a, 3b, 3c; 4, 4a, 4b, 4c) are deflected relative to one another.

2. Plug-on part according to Claim 1, **characterized in that** the flexing zone (29a or 29b or 29c) comprises an elastically deformable housing region (33 or 43) which connects the two housing parts (3a, 3b, 3c; 4a, 4b, 4c) to one another.

3. Plug-on part according to Claim 1, **characterized in that** the flexing zone (29) comprises an articulated connection (24) between the two housing parts (3, 4).

4. Plug-on part according to Claim 3, **characterized in that** the articulated connection (24) comprises a hinge (25), which forms a pivot axis arranged at right angles to the plane defined by the axis of rotation (B) of the brush head and the longitudinal axis (A) of the housing (2), and an elastomeric articulation sleeve (26) between the two housing parts (3, 4).

5. Plug-on part according to Claim 4, **characterized in that** the elastomeric articulation sleeve (26) is installed between mutually facing end surfaces (27, 28) of the two housing parts (3, 4) in the form of a wedge and such that it tapers towards the hinge (25).

6. Plug-on part according to Claim 2, **characterized in that** the elastically deformable housing region (33 or 43) comprises narrow webs which connect the two housing parts (3a, 4a or 3b, 4b or 3c, 4c).

7. Plug-on part according to Claim 2 or 6, **characterized in that**, together with the elastically deformable housing region (33 or 43), a sleeve-like bellows (36 or 41), which is installed between mutually facing end surfaces (37, 38 or 39, 40) of the two housing parts (3a, 4a or 3b, 4b), forms the flexing zone (29a or 29b).

8. Plug-on part according to Claim 2 or 6, **characterized in that** the elastically deformable housing region (43) is produced from the same material as the two housing parts (3c, 4c) and has a sleeve-like part (44) which is preferably provided with through-passages for the purpose of increasing the elasticity.

9. The plug-on part as claimed in one of Claims 1 to 8, having a drive shaft (8) which is arranged in the cavity (6) of the housing (2, 2a, 2b, 2c) and forms part of the transmission device (7), **characterized in that** the drive shaft (8) is designed as a flexible shaft.

10. Plug-on part according to one of Claims 1 to 8, **characterized in that** that part of the transmission device (7) which is assigned to the deflectable housing part (4, 4a, 4b, 4c) is connected via a universal joint to that part of the transmission device (7) which is arranged in the other housing part (3, 3a, 3b, 3c).

11. Plug-on part according to one of Claims 1 to 10, **characterized in that** the deflection of the housing part (4, 4a, 4b, 4c) or the change in the angle between the axis of rotation (B) of the brush head and the longitudinal axis (A) takes place in the angle range of from 0° to 90° and is preferably approximately 6°.

12. Plug-on part according to one of Claims 1 to 11, **characterized in that** the angle between the axis of rotation (B) of the brush head and the longitudinal axis (A) of the housing (2, 2a, 2b, 2c) is somewhat smaller than a right angle in a normal position and somewhat greater than a right angle in a position of maximum deflection, with the result that the brush head (5) is inclined rearwards in the normal position and forwards in the deflected position.

13. Plug-on part according to one of Claims 1-12, having a brush head (5) which executes an alternating rotary movement, **characterized in that** the transmission device (7) is designed such that, when the brush head (5) is forced back as a result of forces acting in the direction of the brushing surface (12), the angle of rotation of said brush head decreases.

## Revendications

1. Pièce à rapporter (1) pour une brosse à dents entraînée par un moteur, avec un corps allongé (2, 2a, 2b, 2c), présentant intérieurement un espace creux (6), pouvant être emmanché sur un manche d'une brosse à dents, avec une tête de brosse (5), montée mobile en rotation dans le corps (2, 2a, 2b, 2c) qui présente un support de poils (10) avec des poils en saillie (11) dont les extrémités forment une surface de brossage (12), l'axe de rotation (B) de la tête de brosse (5) étant disposé sous un angle par rapport à l'axe longitudinal (A) du corps (2, 2a, 2b, 2c), et avec un dispositif de transmission (7), disposé dans l'espace creux du corps (2, 2a, 2b, 2c) et en liaison d'entraînement avec la tête de brosse (5), qui peut être couplé à un moteur logé dans un manche d'une brosse à dents et par l'intermédiaire duquel la tête de brosse (5) est entraînable en rotation, **caractérisée en ce que** le corps (2, 2a, 2b, 2c) présente une zone de flexion (29, 29a, 29b, 29c) et est subdivisé par cette dernière en deux parties de corps (3, 3a, 3b, 3c ; 4, 4a, 4b, 4c) qui peuvent être déviées élastiquement l'une par rapport à l'autre, de telle sorte que la tête de brosse (5) peut pivoter ou être repoussée élastiquement dans un plan défini par l'axe de rotation (B) de la tête de brosse et par l'axe longitudinal (A) du corps (2, 2a, 2b, 2c) sous l'effet de forces dirigées contre la surface de brossage (12), et **en ce que** le dispositif de transmission (7) est réalisé de telle sorte que la liaison d'entraînement avec la tête de brosse (5) reste maintenue même lors de la déviation des parties de corps (3, 3a, 3b, 3c ; 4, 4a, 4b, 4c) l'une par rapport à l'autre.

2. Pièce à rapporter suivant la revendication 1, **caractérisée en ce que** la zone de flexion (29a ou 29b ou 29c) comporte une zone de corps (33 ou 43) déformable élastiquement, reliant entre elles les deux parties de corps (3a, 3b, 3c ; 4a, 4b, 4c).

3. Pièce à rapporter suivant la revendication 1, **caractérisée en ce que** la zone de flexion (29) comporte une liaison articulée (24) entre les deux parties de corps (3, 4).

4. Pièce à rapporter suivant la revendication 3, **caractérisée en ce que** la liaison articulée (24) comporte une charnière (25), qui forme un axe de pivotement disposé à angle droit par rapport au plan défini par l'axe de rotation (B) de la tête de brosse et l'axe longitudinal (A) du corps (2), ainsi qu'une manchette articulée (26) à élasticité de caoutchouc entre les deux parties de corps (3, 4).

5. Pièce à rapporter suivant la revendication 4, **caractérisée en ce que** la manchette articulée élastique (26) est incorporée en forme de coin, et en se rétrécissant vers la charnière (25), entre des surfaces frontales (27, 28) tournées l'une vers l'autre des deux parties de corps (3, 4).

6. Pièce à rapporter suivant la revendication 2, **caractérisée en ce que** la zone de corps (33 ou 43) déformable élastiquement comporte des traverses étroites, reliant les deux parties de corps (3a, 4a ou 3b, 4b ou 3c, 4c).

7. Pièce à rapporter suivant l'une des revendications 2 et 6, **caractérisée en ce qu'**un soufflet (36 ou 41) en forme de manchette, incorporé entre des surfaces frontales (37, 38 ou 39, 40) tournées l'une vers l'autre des deux parties de corps (3a, 4a ou 3b, 4b), forme avec la zone de corps (33 ou 43) déformable élastiquement la zone de flexion (29a ou 29b).

8. Pièce à rapporter suivant l'une des revendications 2 et 6, **caractérisée en ce que** la zone de corps (43) déformable élastiquement est fabriquée dans le même matériau que les deux parties de corps (3c, 4c) et présente une partie (44) en forme de manchette, munie de préférence de passages pour élever l'élasticité.

9. Pièce à rapporter suivant l'une des revendications 1 à 8, avec un arbre moteur (8) formant une partie du dispositif de transmission (7) et disposé dans l'espace creux (6) du corps (2, 2a, 2b, 2c), **caractérisée en ce que** l'arbre moteur (8) est réalisé sous forme d'arbre flexible.

10. Pièce à rapporter suivant l'une des revendications 1 à 8, **caractérisée en ce qu'**une partie du dispositif de transmission (7), associée à la partie de corps (4, 4a, 4b, 4c) pouvant être déviée, est reliée par l'intermédiaire d'un joint de Cardan à la partie du dispositif de transmission (7) disposée dans l'autre partie de corps (3, 3a, 3b, 3c).

11. Pièce à rapporter suivant l'une des revendications 1 à 10, **caractérisée en ce que** la déviation de la partie de corps (4, 4a, 4b, 4c) ou la modification de l'angle entre l'axe de rotation (B) de la tête de brosse et l'axe longitudinal (A) intervient dans une plage angulaire de 0° à 90° et est de préférence d'environ 6°.

12. Pièce à rapporter suivant l'une des revendications 1 à 11, **caractérisée en ce que** l'angle entre l'axe de rotation (B) de la tête de brosse et l'axe longitudinal (A) du corps (2, 2a, 2b, 2c) est légèrement inférieur dans une position normale, et légèrement supérieur dans une position de déviation maximale, à un angle droit, de sorte que la tête de brosse (5) est inclinée vers l'arrière dans la position normale, et vers l'avant dans la position de déviation.

13. Pièce à rapporter suivant l'une des revendications 1 à 12, avec une tête de brosse (5) exécutant un mouvement de rotation alternant, **caractérisée en ce que** le dispositif de transmission (7) est réalisé de telle sorte que, lorsque la tête de brosse (5) est repoussée sous l'effet de forces dirigées sur la surface de brossage (12), son angle de rotation se réduit.
